# EUROPEAN PATENT SPECIFICATION

(11) **EP 3 214 405 B1**
(45) Date of publication and mention of the grant of the patent: **19.06.2019**
(21) Application number: 15854462.7
(22) Date of filing: 28.10.2015
(51) Int. Cl.: G01C 21/36, G01C 21/34

(54) **ELECTRONIC APPARATUS, NAVIGATION METHOD, AND NAVIGATION PROGRAM**
ELEKTRONISCHE VORRICHTUNG, NAVIGATIONSVERFAHREN UND NAVIGATIONSPROGRAMM
APPAREIL ÉLECTRONIQUE, PROCÉDÉ DE NAVIGATION, ET PROGRAMME DE NAVIGATION

(30) Priority: 29.10.2014 JP 2014220731
(43) Date of publication of application: 06.09.2017
(73) Proprietor: Kyocera Corporation, Kyoto-shi, Kyoto 612-8501 (JP)
(72) Inventor: TANABE, Shigeki, Kyoto-shi Kyoto 612-8501 (JP); MORITA, Hideki, Kyoto-shi Kyoto 612-8501 (JP); MASUIKE, Isao, Kyoto-shi Kyoto 612-8501 (JP)
(74) Representative: SSM Sandmair
(86) International application number: PCT/JP2015/080459
(87) International publication number: WO 2016/068214

(56) References cited:
- JP-A- 2004 012 268
- JP-A- 2010 204 008
- JP-A- 2013 053 995
- US-A1- 2013 103 313
- US-B1- 9 057 612

## Description

### Field

The present invention relates to an electronic device, a navigation method, and a navigation program. Background

A technique of guiding a user along a route to a destination after the user performs an operation of selecting moving means is known (for example, see Patent Literature 1).

### Citation List

### Patent Literature

Patent Literature 1: JP 2009-008465 A
JP 2010 204008 A relates to the presentation of a progress to a user if moved to a destination by means of a transportation device other than an actually used transportation device.
JP 2004 012268 A relates to the enhancement of convenience for user by setting a route while taking history information about moving of a user into account, when the route is set in response to requirement of the user.
US 2013/103313 A1 discloses devices, methods, and machine-readable media to facilitate intuitive comparison and selection of calculated navigation routes.
JP 2013 053995 A relates to reducing an operation load of a user when changing travel means during route guidance.

### Summary

### Technical Problem

There is room for improvement in the technique of guiding a user along a route.

### Solution to Problem

According to one aspect, an electronic device is defined in claim 1.

According to another aspect, a navigation method is defined in claim 6.

According to another aspect, a navigation program is defined in claim 7.

### Brief Description of Drawings

FIG. 1 is a block diagram of a mobile electronic device according to embodiments.
FIG. 2 is a diagram illustrating an example of a transition of a navigation screen.
FIG. 3 is a diagram illustrating an example of a navigation screen when moving means is changed in the way.
FIG. 4 is a flowchart illustrating an example of a navigation operation of a mobile electronic device.
FIG. 5 is a diagram illustrating another example of a change in display of a route.

### Description of Embodiments

Embodiments of the invention will be described below in detail with reference to the accompanying drawings. Examples of a mobile electronic device which will be described in the following embodiments include a smartphone, a mobile phone, a tablet PC, a portable PC, a digital camera, a media player, an electronic book reader, a navigator, and a game machine, but some embodiments are not limited thereto.

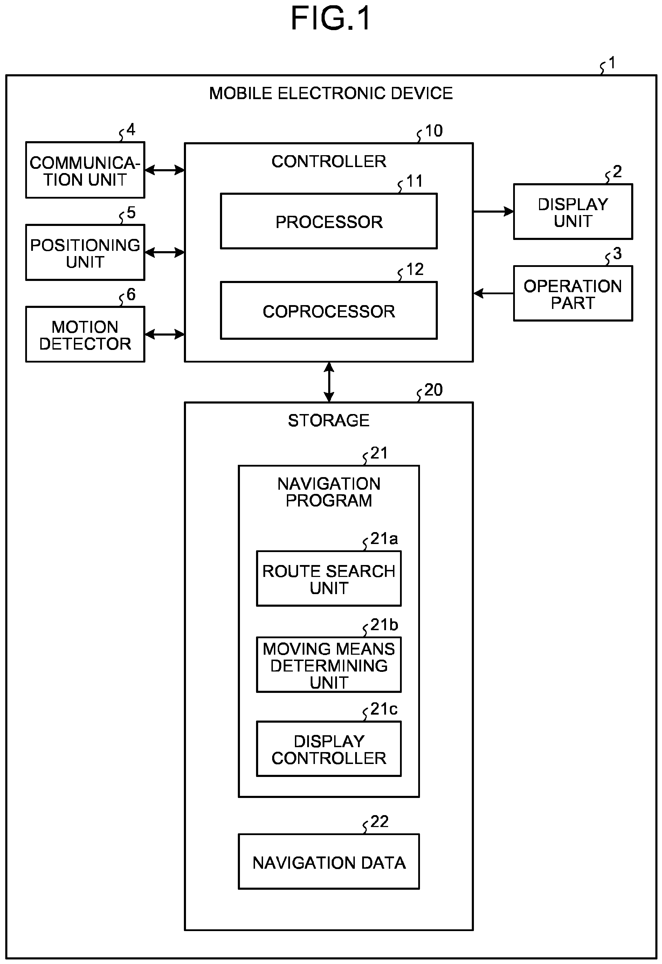

A configuration of a mobile electronic device 1 according to an example of embodiments will be described below with reference to FIG. 1. FIG. 1 is a block diagram of the mobile electronic device 1. The mobile electronic device 1 includes a display unit 2, an operation part 3, a communication unit 4, a positioning unit 5, a motion detector 6, a controller 10, and storage 20.

The display unit 2 includes a display device. Examples of the display device include a liquid crystal display, an organic electro-luminescence (EL) display, and an inorganic EL display. The display unit 2 displays a screen including character, image, symbol, figure, or the like using the display device.

The operation part 3 receives a user's operation. The operation part 3 includes, for example, at least one of a button, a keyboard, a dial, a lever, a touch screen, and a touch sensor. The operation part 3 may receive an operation in a non-contact manner using sound, light, or the like. The operation part 3 may support a plurality of operation schemes.

A whole or a part of the operation part 3 may be integrated with the display unit 2. For example, the operation part 3 may be a touch screen display in which the operation part is integrated with the display unit 2. The mobile electronic device 1 may detect a gesture on the display unit 2 using a user's finger or the like via the touch screen display.

The communication unit 4 includes one or more antennas. The communication unit 4 receives radio waves propagating in a space via the one or more antennas. The communication unit 4 converts the received radio waves into an electrical signal. The communication unit 4 transmits the electrical signal based on the received radio waves to the controller 10. The communication unit 4 enables radio data communication. The communication unit 4 supports radio communication of a relatively broad range which is provided from a common carrier. The radio communication of a relatively broad range which is provided from a common carrier includes, for example, 3G and 4G. The communication unit 4 communicates with another communication device, for example, via a radio base station. The communication unit 4 may support radio communication of a relatively narrow communication range such as WiFi (registered trademark) or Bluetooth (registered trademark). The communication unit 4 may support voice communication.

The positioning unit 5 includes one or more antennas. The positioning unit 5 receives radio waves propagating in a space via the one or more antennas. The positioning unit 5 converts the received radio waves into an electrical signal. The positioning unit 5 transmits the electrical signal based on the received radio waves. The positioning unit 5 measures a current position of the mobile electronic device 1. The positioning unit 5 measures the current position using a satellite positioning system such as GPS or GLONASS. Specifically, the positioning unit 5 may receive signals from satellites which are used in GPS, GLONASS or the like. The positioning unit 5 may be referred to as a position determining unit. The positioning unit 5 may measure the current position using another method instead of or in addition to the satellite positioning system. For example, the positioning unit 5 may measure the current position on the basis of radio waves received by the communication unit 4 and a radio base station emitting the radio waves. The positioning unit 5 may transmit and receive data to and from another device using the communication unit 4 upon measuring the current position. Upon measuring the current position, the positioning unit 5 may transmit the electrical signal to the controller 10 and cause the controller 10 to perform at least partial processes associated with measurement of the current position. The positioning unit 5 may subsidiarily use various sensors such as an acceleration sensor, a geomagnetic sensor, a gyroscope, and an azimuth sensor to measure the current position.

The motion detector 6 detects a motion of the mobile electronic device 1 in a three-dimensional space. The motion which is detected by the motion detector 6 includes, for example, a change in position of the mobile electronic device 1 and a change in attitude of the mobile electronic device 1. The motion detector 6 may include an acceleration sensor. The acceleration sensor can detect the motion of the mobile electronic device 1. The motion detector 6 may include other sensors such as a gyroscope, a geomagnetic sensor, and an azimuth sensor to detect the motion of the mobile electronic device 1.

The mobile electronic device 1 can acquire, by using the motion detector 6, for example, patterns of a frequency of vibration and an amplitude of vibration of the mobile electronic device 1 which are caused due to movement. The patterns of the vibration frequency, the vibration amplitude and the like may be used for the mobile electronic device 1 to determine current moving means of a user.

The controller 10 controls the mobile electronic device 1 as a whole. The controller 10 includes one or more processors 11 and one or more coprocessors 12. The processor 11 and the coprocessor 12 are arithmetic processing units. An arithmetic processing unit includes, for example, a central processing unit (CPU), a system-on-a-chip (SoC), a micro control unit (MCU), and a field-programmable gate array (FPGA), but is not limited thereto.

The processor 11 embodies various functions of the mobile electronic device 1 by executing various programs stored in the storage 20. Specifically, the processor 11 performs a variety of control by executing commands included in the programs with reference to data acquired from the constituent units of the mobile electronic device 1 and arithmetic processing results. Operations which can be performed by the controller 10 can be performed by the processor 11 included in the controller 10. The operations which are performed by the controller 10 may be performed by the processor 11.

The coprocessor 12 operates with power consumption less than that of the processor 11. Even when the processor 11 stops or decreases a processing speed to reduce the power consumption, the coprocessor 12 is allowed to normally operate. The coprocessor 12 having characteristics suitable for normal operating is used, for example, in acquisition and analysis of detected values of various sensors and execution of processing based on analysis results. Operations which can be performed by the controller 10 can be performed by the coprocessor 12 included in the controller 10. The operations which are performed by the controller 10 may be performed by the coprocessor 12.

The storage 20 stores programs and data. The storage 20 is also used as a work area in which the processing result of the controller 10 is temporarily stored. The storage 20 may include arbitrary non-transitory storage mediums such as one or more semiconductor storage mediums and one or more magnetic storage mediums. The storage 20 may include a plurality of types of storage mediums. The storage 20 may include a combination of a portable non-transistor storage medium such as one or more memory cards, one or more optical disks, or one or more magneto-optical disk and a storage medium reader. The storage 20 may include a storage device which is used as a temporary storage area such as one or more random access memories (RAM).

The storage 20 stores, for example, a navigation program 21 and navigation data 22. The navigation program 21 provides a function of displaying a map on the display unit 2 to guide a user to a destination. The navigation data 22 includes various types of data required for guiding a user to a destination such as map data, road data, and data of public transports.

The navigation program 21 includes a route search unit 21a, a moving means determining unit 21b, and a display controller 21c. The route search unit 21a provides a function of searching for a route from a departure place to a destination. By the function provided from the route search unit 21a, one or more routes are searched for an optimal route. The moving means determining unit 21b provides a function of determining current moving means of a user of the mobile electronic device 1. The display controller 21c provides a function of controlling display of the display unit 2 to guide a user to a destination on the basis of the searched route and the determined moving means. Operations which can be respectively performed by the route search unit 21a, the moving means determining unit 21b, and the display controller 21c can be performed by the navigation program 21 including the route search unit 21a, the moving means determining unit 21b, and the display controller 21c. In other words, the operations which are performed by the route search unit 21a, the moving means determining unit 21b, and the display controller 21c may be performed by the navigation program 21.

The controller 10 embodies the function of guiding a user to a destination by executing the navigation program 21. Specifically, the controller 10 searches for a route from a departure place to a destination for each of a plurality of predetermined moving means through the use of the function provided from the route search unit 21a of the navigation program 21. The controller 10 simultaneously displays the plurality of searched routes on the display unit 2 through the use of the function provided from the display controller 21c of the navigation program 21. The routes are displayed to be distinguished from other routes using line color, line pattern, added index, and the like so as to determine corresponding moving means.

Thereafter, the controller 10 determines current moving means of a user of the mobile electronic device 1 through the use of the function provided from the moving means determining unit 21b of the navigation program 21. Through the use of the function provided from the moving means determining unit 21b, the controller 10 actively determines the moving means of the user on the basis of acceleration detected by the acceleration sensor included in the motion detector 6. For example, acceleration in an X-axis direction, acceleration in a Y-axis direction, acceleration in a Z-axis direction, and a resultant vector value of the acceleration vectors are transmitted as detection results of the acceleration sensor to the controller 10. The controller 10 logs the resultant vector value in which the acceleration vectors are combined. The logging may be performed using the coprocessor 12. The controller 10 analyzes the logged data and determines the moving means of the user. Examples of the moving means which can be determined include walk, vehicle, and train, but are not limited thereto.

The controller 10 determines the moving means using predetermined acceleration patterns. An acceleration pattern is a pattern of acceleration which is characteristically detected by the acceleration sensor when the user uses certain moving means. The acceleration pattern is prepared, for example, by acquiring detected values of the acceleration sensor in advance when a test subject actually uses certain moving means. One or more acceleration patterns are prepared for each moving means.

The controller 10 determines the moving means of the user by comparing the acceleration patterns with the data obtained by logging the resultant vector value. The controller 10 may additionally use detected values of other sensors such as a geomagnetic sensor, a gyroscope, and an azimuth sensor to determine the moving means.

After determining the moving means of the user, the controller 10 changes display of a route through the use of the function provided from the display controller 21c of the navigation program 21. The change of the display is performed such that a route corresponding to the moving means determined as the moving means of the user is more conspicuous than routes corresponding to other moving means.

The controller 10 displays a plurality of routes corresponding to the moving means, respectively. The user can see the route corresponding to the moving means which is used by the user without inputting the moving means.

The controller 10 determines the moving means of the user after displaying a plurality of routes and changes the display such that the route corresponding to the determined moving means is conspicuous. The user can more easily see the route corresponding to the moving means in use without inputting the moving means.

The controller 10 continuously or periodically determine the moving means until arriving at the destination. When the determined moving means is changed, the controller 10 searches for a route from a current position to the destination using the changed moving means and displays the searched routes on the display unit 2. Even when the moving means is changed in the way, the user can see the route corresponding to the changed moving means without inputting the changed moving means.

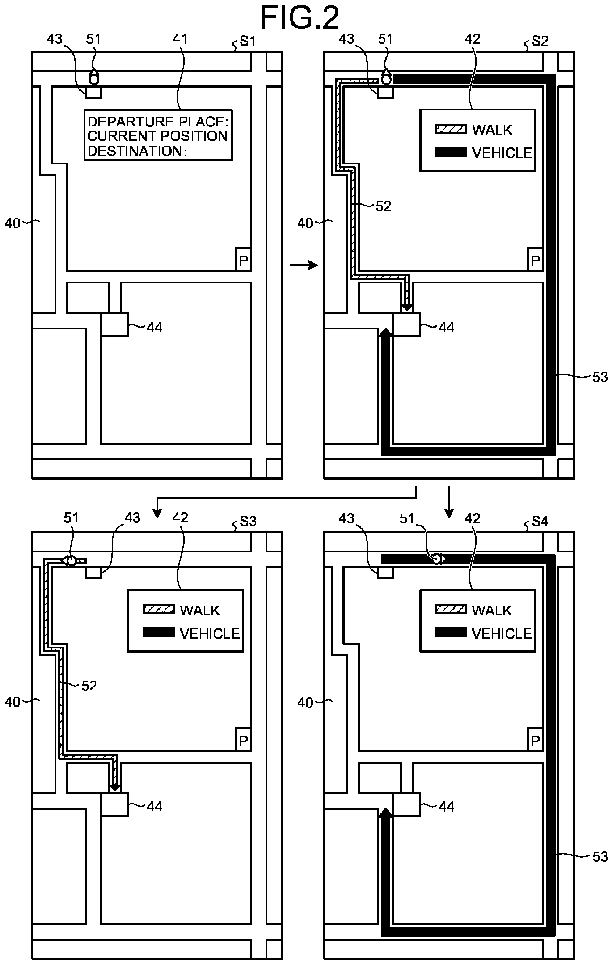

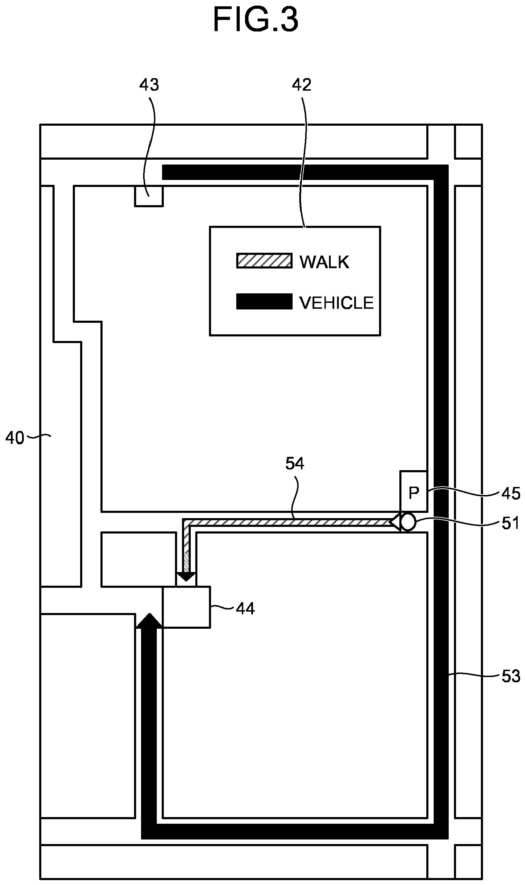

A specific example of control of guidance to a destination will be described below with reference to FIGS. 2 and 3. FIG. 2 is a diagram illustrating an example of a transition of navigation screen. FIG. 3 is a diagram illustrating an example of a navigation screen when moving means is changed in the way.

When guidance to a destination is instructed, the controller 10 displays a navigation screen 40 on the display unit 2 as illustrated at Step S1 of FIG. 2. A map of a neighboring area including a mark 51 indicating a current position and a subwindow 41 for designating a departure place and a destination are displayed on the navigation screen 40. In the subwindow 41, the "current position" is set as a default departure place.

When the user operates the operation part 3 to input a destination, the controller 10 receives the input destination. The controller 10 searches for a route from the departure place to the destination for each of a plurality of predetermined moving means. In this example, "walk" and "vehicle" are set in advance as the moving means. The number of moving means which can be set is not limited to two, but the moving means may include "train," "bicycle," or the like. When there is a section in which the set moving means cannot be used, the route may be searched for using "walk" as substitute moving means in the section.

When the search is completed, the controller 10 displays a plurality of searched routes as illustrated at Step S2. At Step S2, a route 52 from a departure place 43 to a destination 44 using "walk" as the moving means and a route 53 from the departure place 43 to the destination 44 using "vehicle" as the moving means are displayed. In addition, a legend 42 for indicating that the route 52 corresponds to "walk" and the route 53 corresponds to "vehicle" is displayed.

After a plurality of routes are displayed, the controller 10 determines the moving means. It is preferable that determination of the moving means be performed in a predetermined period. This is because acceleration patterns are preferably collected in a certain period to accurately determine the moving means and the user may not immediately start movement using the moving means. The predetermined period is, for example, 30 seconds or several minutes.

When it is determined that the moving means is "walk," the controller 10 displays only the route 52 corresponding to "walk" among the routes to the destination 44 and hides the other route as illustrated at Step S3.

On the other hand, when it is determined that the moving means is "vehicle," the controller 10 displays only the route 53 corresponding to "vehicle" among the routes to the destination 44 and hides the other route as illustrated at Step S4.

Thereafter, it is assumed that the user stops the vehicle in a parking lot 45 in the way of the route 53 and starts movement by walk. In this case, the controller 10 determines that the moving means is changed from "vehicle" to "walk." The controller 10 searches routes from the current position to the destination 44 using the moving means of "walk" and displays a searched route 54 on the display unit 2 as illustrated in FIG. 3.

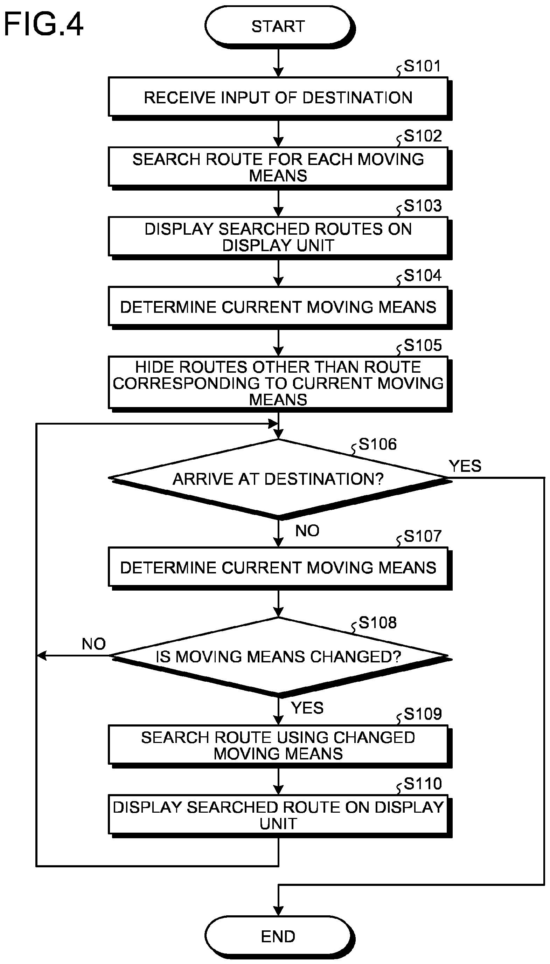

An example of an operation of the mobile electronic device 1 will be described below with reference to FIG. 4. FIG. 4 is a flowchart illustrating an example of a navigation operation of the mobile electronic device 1. The operation illustrated in FIG. 4 is embodied by causing the controller 10 to execute the navigation program 21. The operation illustrated in FIG. 4 is performed when it is instructed to execute navigation.

As illustrated in FIG. 4, the controller 10 receives an input of a destination at Step S101. The controller 10 searches a route to the destination for each predetermined moving means at Step S102. The controller 10 displays the searched routes on the display unit 2 at Step S103.

Thereafter, the controller 10 determines current moving means at Step S104. After determination, the controller 10 hides the routes other than the route corresponding to the current moving means at Step S105.

After the display is changed in this way, the controller 10 determines whether the user arrives at the destination at Step S106. For example, when a distance between the current position and the destination which is measured by the positioning unit 5 is less than a predetermined distance, the controller 10 determines that the user arrives at the destination. When the user arrives at the destination (Step S106, Yes), the controller 10 ends the navigation operation.

When the user does not arrive at the destination (Step S106, No), the controller 10 proceeds to Step S107. The controller 10 determines current moving means at Step S107.

When the moving means is not changed, that is, when the currently determined moving means is the same as the previously determined moving means (Step S108, No), the controller 10 returns to Step S106.

When the moving means is changed, that is, when the currently determined moving means is different from the previously determined moving means (Step S108, Yes), the controller 10 proceeds to Step S109. The controller 10 searches for a route to the destination using the changed moving means at Step S109. The controller 10 displays the searched route on the display unit 2 at Step S110. Thereafter, the controller 10 returns to Step S106.

Some embodiments disclosed in this application can be modified without departing from the scope of the invention. Some embodiments and modifications thereof disclosed in this application can be appropriately combined.

For example, the above-mentioned embodiments are based on the premise that the "current position" set as a default is used as the departure place, but the departure place is not limited to the "current position." When a position other than the "current position" is input as the departure place, the mobile electronic device 1 searches for a route from the departure place to the destination for each of a plurality of predetermined moving means and performs the same control as in the above-mentioned embodiments. Alternatively, the mobile electronic device 1 may search for a route from the departure place to the destination for each of a plurality of predetermined moving means and then display the plurality of routes as they were until the distance between the current position and the destination is less than a predetermined distance. In this case, when the distance between the current position and the destination is less than the predetermined distance, the mobile electronic device 1 determines the moving means and controls the display such that the route corresponding to the determined moving means is more conspicuous than the routes corresponding to the other moving means.

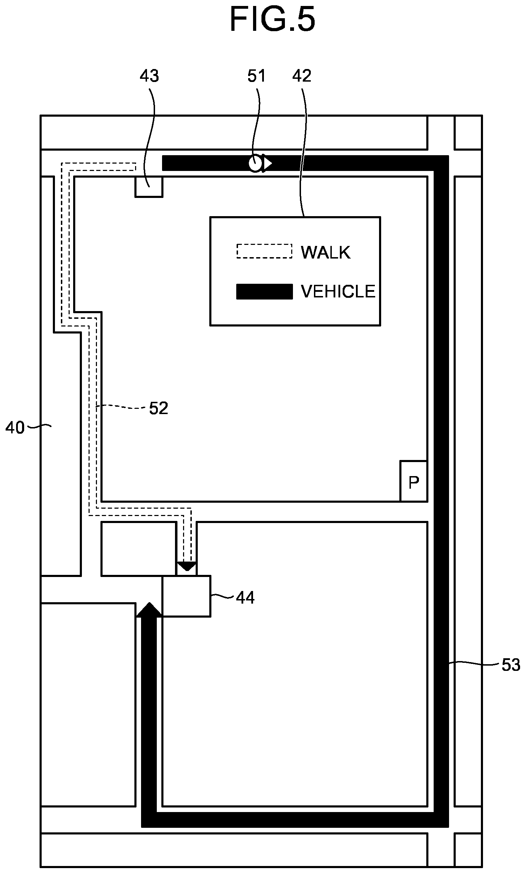

In the above-mentioned embodiments, the control of displaying only the route corresponding to the determined moving means and hiding the routes corresponding to the other moving means when the moving means is determined has been described above. However, the control for causing the route corresponding to the determined moving means to be more conspicuous than the routes corresponding to the other moving means is not limited thereto, and the route corresponding to the determined moving means has only to be displayed with a more emphasis put on the route than on the routes corresponding to the other moving means. For example, as illustrated in FIG. 5, the route 52 other than the route corresponding to the determined moving means may not be hidden but the display form of the route 52 may be changed to be less conspicuous. Alternatively, the display form of the routes other than the route corresponding to the determined moving means may not be changed, but the display form of the route corresponding to the determined moving means may be changed to be more conspicuous.

In the above-mentioned embodiments, an example in which a plurality of routes are displayed and then the display of the routes is changed depending on the determination result of the moving means has been described above, but the display of the routes may be changed on the basis of the determination result of the moving means without displaying the plurality of routes. For example, when it is instructed to perform a navigation operation, the mobile electronic device requests an input of a departure place and a destination and determines the moving means. Then, when the departure place and the destination are input, one optimal route for moving from the departure place to the destination using the determined moving means is searched for and is displayed. Thereafter, the mobile electronic device continuously or periodically determines the moving means until it arrives at the destination. When the moving means is changed, the mobile electronic device searches for a route for moving from the current position to the destination using the changed moving means and displays the searched route.

The program described in the above-mentioned embodiments may be divided into a plurality of modules or may be combined with another program. A part of the program described in some embodiments may be executed by another device such as a server capable of communicating with the mobile electronic device 1. In this case, the mobile electronic device 1 may transmit information on the current position, the acceleration, and the like to the other device.

In this application, descriptions such as "when," "during," "if," "in a case," "upon," "in response to determining," and "in response to detecting" can be understood to be different descriptions depending on situations. In this application, descriptions such as "when a stated condition or event is determined," "when a stated condition or event is detected," "upon determining a stated condition or event," "in response to determining," "upon detecting," and "in response to detecting" can be understood to be different descriptions depending on situations. In this application, a description "detect" can be understood to have a meaning of measure, scale, sense, or the like depending on situations. In this application, a description such as "state" can be understood to be "situation" depending on situations. For example, a moving state can be understood to be a moving situation. A state of a mobile phone can be understood to be a situation of a mobile phone.

### Reference Signs List

- 1: MOBILE ELECTRONIC DEVICE
- 2: DISPLAY UNIT
- 3: OPERATION PART
- 4: COMMUNICATION UNIT
- 5: POSITIONING UNIT
- 6: MOTION DETECTOR
- 10: CONTROLLER
- 11: PROCESSOR
- 12: COPROCESSOR
- 20: STORAGE
- 21: NAVIGATION PROGRAM
- 21a: ROUTE SEARCH UNIT
- 21b: MOVING MEANS DETERMINING UNIT
- 21c: DISPLAY CONTROLLER

## Claims

1. An electronic device (1) comprising:
a display unit (2) configured to display a guide route to a destination;
an operation part (3) configured to receive an input of the destination;
a controller (10) configured to simultaneously display a plurality of moving routes for a plurality of moving means of a user of the electronic device (1) to the destination on the display unit (2) when the destination is input via the operation part (3); and
a moving means determining unit (21b) configured to determine the current moving means of the user of the electronic device (1),
**characterized in that**
the controller (10) is further configured to display the moving route for the changed moving means when the moving means determining unit (21b) detects a change of the moving means during guidance of the moving route.

2. The electronic device (1) according to claim 1, wherein the controller (10) does not display the moving routes for other moving means other than the determined moving means among the plurality of moving routes which are simultaneously displayed when the moving means determining unit (21b) determines the moving means.

3. The electronic device (1) according to claim 1 or 2, wherein the controller (10) displays only the moving route for the determined moving means among the plurality of moving routes which are simultaneously displayed when the moving means determining unit (21b) determines the moving means.

4. The electronic device (1) according to claim 1, wherein the controller (10) displays the moving route for the determined moving means among the plurality of moving routes which are simultaneously displayed with a more emphasis put on the moving route than the moving routes for the other moving means when the moving means determining unit (21b) determines the moving means.

5. The electronic device (1) according to any one of claims 1 to 4, comprising a position determining unit (5) configured to determine a current position,
wherein the controller (10) simultaneously displays the plurality of moving routes from the current position to the destination for the plurality of moving means on the display unit (2) when the destination is input via the operation part (3).

6. A navigation method which is performed by an electronic device (1) including a display unit (2) and an operation part (3), the navigation method comprising the steps of:
receiving an input of a destination via the operation part (3) ;
simultaneously displaying a plurality of moving routes for a plurality of moving means of a user of the electronic device (1) to the destination on the display unit (2) when the input of the destination is received; and
determining the current moving means of the user of the electronic device (1),
**characterized by**
displaying the moving route for the changed moving means when a change of the moving means during guidance of the moving route is detected.

7. A navigation program for causing an electronic device (1) including a display unit (2) and an operation part (3) to perform the steps of:
receiving an input of a destination via the operation part (3) ;
simultaneously displaying a plurality of moving routes for a plurality of moving means of a user of the electronic device (1) to the destination on the display unit (2) when the input of the destination is received; and
determining the current moving means of the user of the electronic device (1),
**characterized by**
displaying the moving route for the changed moving means when a change of the moving means during guidance of the moving route is detected.

## Patentansprüche

1. Elektronische Vorrichtung (1), umfassend:
eine Anzeigeeinheit (2), die konfiguriert ist, eine Führungsroute zu einem Ziel anzuzeigen;
ein Betätigungsteil (3), das konfiguriert ist, eine Eingabe des Ziels zu empfangen;
eine Steuerung (10), die konfiguriert ist, eine Vielzahl von Bewegungsrouten für eine Vielzahl von Bewegungsmitteln eines Benutzers der elektronischen Vorrichtung (1) zum Ziel gleichzeitig auf der Anzeigeeinheit (2) anzuzeigen, wenn das Ziel über das Betätigungsteil (3) eingegeben wird; und
eine Bewegungsmittel-Bestimmungseinheit (21b), die konfiguriert ist, das aktuelle Bewegungsmittel des Benutzers der elektronischen Vorrichtung (1) zu bestimmen,
**dadurch gekennzeichnet, dass**
die Steuerung (10) ferner konfiguriert ist, die Bewegungsroute für das geänderte Bewegungsmittel anzuzeigen, wenn die Bewegungsmittel-Bestimmungseinheit (21b) eine Änderung des Bewegungsmittels während der Bewegungsroutenführung erfasst.

2. Elektronische Vorrichtung (1) nach Anspruch 1, wobei die Steuerung (10) die Bewegungsrouten für andere Bewegungsmittel als das bestimmte Bewegungsmittel aus der Vielzahl von Bewegungsrouten, die gleichzeitig angezeigt werden, nicht anzeigt, wenn die Bewegungsmittel-Bestimmungseinheit (21b) das Bewegungsmittel bestimmt.

3. Elektronische Vorrichtung (1) nach Anspruch 1 oder 2, wobei die Steuerung (10) nur die Bewegungsroute für das bestimmte Bewegungsmittel aus der Vielzahl von Bewegungsrouten, die gleichzeitig angezeigt werden, anzeigt, wenn die Bewegungsmittel-Bestimmungseinheit (21b) das Bewegungsmittel bestimmt.

4. Elektronische Vorrichtung (1) nach Anspruch 1, wobei die Steuerung (10) die Bewegungsroute für das bestimmte Bewegungsmittel aus der Vielzahl von Bewegungsrouten, die gleichzeitig angezeigt werden, anzeigt, wobei die Bewegungsroute stärker hervorgehoben wird als die Bewegungsrouten für die anderen Bewegungsmittel, wenn die Bewegungsmittel-Bestimmungseinheit (21b) das Bewegungsmittel bestimmt.

5. Elektronische Vorrichtung (1) nach einem der Ansprüche 1 bis 4, umfassend eine Positionsbestimmungseinheit (5), die konfiguriert ist, eine aktuelle Position zu bestimmen,
wobei die Steuerung (10) gleichzeitig die Vielzahl von Bewegungsrouten von der aktuellen Position zum Ziel für die Vielzahl von Bewegungsmitteln auf der Anzeigeeinheit (2) anzeigt, wenn das Ziel über das Betätigungsteil (3) eingegeben wird.

6. Navigationsverfahren, das durch eine elektronische Vorrichtung (1), umfassend eine Anzeigeeinheit (2) und ein Betätigungsteil (3), durchgeführt wird, wobei das Navigationsverfahren die folgenden Schritte umfasst:
Empfangen einer Eingabe eines Ziels über das Betätigungsteil (3);
gleichzeitiges Anzeigen einer Vielzahl von Bewegungsrouten für eine Vielzahl von Bewegungsmitteln eines Benutzers der elektronischen Vorrichtung (1) zum Ziel auf der Anzeigeeinheit (2), wenn die Eingabe des Ziels empfangen wird; und
Bestimmen des aktuellen Bewegungsmittels des Benutzers der elektronischen Vorrichtung (1),
**gekennzeichnet durch**
Anzeigen der Bewegungsroute für das geänderte Bewegungsmittel, wenn eine Änderung des Bewegungsmittels während der Bewegungsroutenführung erfasst wird.

7. Navigationsprogramm zum Veranlassen einer elektronischen Vorrichtung (1), umfassend eine Anzeigeeinheit (2) und ein Betätigungsteil (3), dazu, die folgenden Schritte durchzuführen:
Empfangen einer Eingabe eines Ziels über das Betätigungsteil (3);
gleichzeitiges Anzeigen einer Vielzahl von Bewegungsrouten für eine Vielzahl von Bewegungsmitteln eines Benutzers der elektronischen Vorrichtung (1) zum Ziel auf der Anzeigeeinheit (2), wenn die Eingabe des Ziels empfangen wird; und
Bestimmen des aktuellen Bewegungsmittels des Benutzers der elektronischen Vorrichtung (1),
**gekennzeichnet durch**
Anzeigen der Bewegungsroute für das geänderte Bewegungsmittel, wenn eine Änderung des Bewegungsmittels während der Bewegungsroutenführung erfasst wird.

## Revendications

1. Dispositif électronique (1) comprenant :
une unité d'affichage (2) conçue pour afficher un itinéraire de guidage vers une destination ;
une partie de fonctionnement (3) conçue pour recevoir une entrée de la destination ;
un dispositif de commande (10) conçu pour afficher simultanément une pluralité d'itinéraires de déplacement pour une pluralité de moyens de déplacement d'un utilisateur du dispositif électronique (1) vers la destination sur l'unité d'affichage (2) lorsque la destination est entrée par le biais de la partie de fonctionnement (3) ; et
une unité de détermination de moyen de déplacement (21b) conçue pour déterminer le moyen de déplacement actuel de l'utilisateur du dispositif électronique (1),
**caractérisé en ce que**
le dispositif de commande (10) est en outre conçu pour afficher l'itinéraire de déplacement pour le moyen de déplacement modifié lorsque l'unité de détermination de moyen de déplacement (21b) détecte un changement du moyen de déplacement pendant le guidage de l'itinéraire de déplacement.

2. Dispositif électronique (1) selon la revendication 1, dans lequel le dispositif de commande (10) n'affiche pas les itinéraires de déplacement pour d'autres moyens de déplacement autres que le moyen de déplacement déterminé parmi la pluralité d'itinéraires de déplacement qui sont affichés simultanément lorsque l'unité de détermination de moyen de déplacement (21b) détermine le moyen de déplacement.

3. Dispositif électronique (1) selon la revendication 1 ou 2, dans lequel le dispositif de commande (10) n'affiche que l'itinéraire de déplacement pour le moyen de déplacement déterminé parmi la pluralité d'itinéraires de déplacement qui sont affichés simultanément lorsque l'unité de détermination de moyen de déplacement (21b) détermine le moyen de déplacement.

4. Dispositif électronique (1) selon la revendication 1, dans lequel le dispositif de commande (10) affiche l'itinéraire de déplacement pour le moyen de déplacement déterminé parmi la pluralité d'itinéraires de déplacement qui sont affichés simultanément avec davantage l'accent sur l'itinéraire de déplacement que les itinéraires de déplacement pour les autres moyens de déplacement lorsque l'unité de détermination de moyen de déplacement (21b) détermine le moyen de déplacement.

5. Dispositif électronique (1) selon l'une quelconque des revendications 1 à 4, comprenant une unité de détermination de position (5) conçue pour déterminer une position actuelle,
dans lequel le dispositif de commande (10) affiche simultanément la pluralité d'itinéraires de déplacement de la position actuelle à la destination pour la pluralité de moyens de déplacement sur l'unité d'affichage (2) lorsque la destination est entrée par le biais de la partie de fonctionnement (3).

6. Procédé de navigation qui est effectué par un dispositif électronique (1) comprenant une unité d'affichage (2) et une partie de fonctionnement (3), le procédé de navigation comprenant les étapes de :
réception d'une entrée d'une destination par le biais de la partie de fonctionnement (3) ;
affichage simultané d'une pluralité d'itinéraires de déplacement pour une pluralité de moyens de déplacement d'un utilisateur du dispositif électronique (1) vers la destination sur l'unité d'affichage (2) lorsque l'entrée de la destination est reçue ; et
détermination du moyen de déplacement actuel de l'utilisateur du dispositif électronique (1),
**caractérisé par**
l'affichage de l'itinéraire de déplacement pour le moyen de déplacement modifié lorsqu'un changement du moyen de déplacement pendant le guidage de l'itinéraire de déplacement est détecté.

7. Programme de navigation destiné à amener un dispositif électronique (1) comprenant une unité d'affichage (2) et une partie de fonctionnement (3) à effectuer les étapes de :
réception d'une entrée d'une destination par le biais de la partie de fonctionnement (3) ;
affichage simultané d'une pluralité d'itinéraires de déplacement pour une pluralité de moyens de déplacement d'un utilisateur du dispositif électronique (1) vers la destination sur l'unité d'affichage (2) lorsque l'entrée de la destination est reçue ; et
détermination du moyen de déplacement actuel de l'utilisateur du dispositif électronique (1),
**caractérisé par**
l'affichage de l'itinéraire de déplacement pour le moyen de déplacement modifié lorsqu'un changement du moyen de déplacement pendant le guidage de l'itinéraire de déplacement est détecté.
